# EUROPÄISCHE PATENTSCHRIFT

(11) **EP 4 010 606 B1**
(45) Veröffentlichungstag und Bekanntmachung des Hinweises auf die Patenterteilung: **28.02.2024**
(21) Anmeldenummer: 20737351.5
(22) Anmeldetag: 25.06.2020
(51) Int. Cl.: F16D 25/08

(54) **RINGKOLBEN MIT EINER ZENTRIEREINRICHTUNG FÜR EINE ZENTRALAUSRÜCKVORRICHTUNG ZUM HYDRAULISCHEN BETÄTIGEN EINER KUPPLUNG SOWIE ZENTRALAUSRÜCKVORRICHTUNG**
ANNULAR PISTON WITH A CENTERING DEVICE FOR A CONCENTRIC SLAVE CYLINDER FOR HYDRAULICALLY ACTUATING A CLUTCH AND CONCENTRIC SLAVE CYLINDER
PISTON ANNULAIRE AVEC UN DISPOSITIF DE CENTRAGE POUR UN CYLINDRE RÉCEPTEUR CONCENTRIQUE POUR L'ACTIONNEMENT HYDRAULIQUE D'UN EMBRAYAGE ET CYLINDRE RÉCEPTEUR CONCENTRIQUE

(30) Priorität: 06.08.2019 DE 102019121242
(43) Veröffentlichungstag der Anmeldung: 15.06.2022
(73) Patentinhaber: Schaeffler Technologies AG & Co. KG, 91074 Herzogenaurach (DE)
(72) Erfinder: NIESEN, Thomas, 76227 Karlsruhe (DE); MAISCH, Timo, 76571 Gaggenau (DE)
(86) Internationale Anmeldenummer: PCT/DE2020/100551
(87) Internationale Veröffentlichungsnummer: WO 2021/023331

(56) Entgegenhaltungen:
- DE-A1- 3 427 791
- DE-A1- 19 724 988
- DE-A1-102013 215 076
- DE-A1-102014 208 898
- DE-A1-102016 208 102
- DE-A1-102017 127 661
- FR-A1- 2 780 465
- JP-A- 2002 147 495
- JP-A- 2005 061 569

## Beschreibung

Die Erfindung betrifft eine Zentralausrückvorrichtung zum Ein- und Ausrücken einer Kupplungsvorrichtung mit einem Kolbenelement.

Bekannte Kupplungsvorrichtungen, wie etwa eine Doppelkupplung, sind üblicherweise deckelfest und motorseitig montiert.

Durch den Hebelarm einer Kupplungsvorrichtung bzw. deren Kupplungsscheiben und durch Bauteiltoleranzen entsteht eine Schiefstellung der Kupplungsvorrichtung bzw. der Kupplungsscheiben relativ zur Vertikalen des Fahrzeuges.

Dies führt im Betrieb zu einem Taumeln der Kupplungsvorrichtung, die sich auf das Einrücksystem bzw. auf eine Zentralausrückvorrichtung bzw. einen sogenannten double concentric slave cylinder (dCSC) mit Ausrücklager und Kolbenelement überträgt.

Beim Abschalten des Systems taumelt die Kupplungsscheibe bzw. die gesamte Kupplungsvorrichtung mit größer werdendem Winkel aus, wodurch das/die Kolbenelement(e) exzentrisch zu einem Gehäuseelement positioniert werden. Dies führt zu einer höheren und andauernden Belastung der jeweiligen Dichtelemente, die an einem Kolbenelement befestigt sind, um einen Druckraum zusammen mit dem Gehäuseelement zu bilden.

Aus der JP 2002 147 495 A ist eine Ausrückvorrichtung nach dem Oberbegriff des Anspruchs 1 offenbart. Weiteren Stand der Technik zeigen die DE 10 2013 215 076 A1, die DE 10 2016 208 102 A1, die DE 10 2017 127 661 A1, die FR 2 780 465 A1, die DE 10 2014 208 898 A1, die JP 2005 061 569 A1, die DE 197 24 988 A1) sowie die DE 34 27 791 A1.

Daher ist es Aufgabe der vorliegenden Erfindung, eine Zentralausrückvorrichtung zum Ein- und Ausrücken einer Kupplungsvorrichtung anzugeben, welche kostengünstig und materialsparend herstellbar ist sowie vorzugsweise eine exzentrische Positionierung des Kolbenelements in einem Druckraum eines Gehäuseelement unterbindet.

Diese Aufgabe wird erfindungsgemäß durch die Merkmale der unabhängigen Patentansprüche gelöst. Weitere vorteilhafte Weiterbildungen sind Gegenstand der Unteransprüche.

Erfindungsgemäß umfasst bei einem ersten Aspekt der vorliegenden Erfindung eine Zentralausrückvorrichtung zum Ein- und Ausrücken einer Kupplungsvorrichtung einen Körper mit einem ersten Teilabschnitt zum Dichten eines Druckraums und mit einem zweiten Teilabschnitt zum Kontaktieren einer Ausrücklagervorrichtung.

Bevorzugterweise umfasst der Körper des Kolbenelements eine Zentriereinrichtung, um das Kolbenelement innerhalb eines Druckraums eines Gehäuseelements einer Zentralausrückvorrichtung zu zentrieren.

Ferner ist es bevorzugt, dass die Zentriereinrichtung, insbesondere mindestens eine Zentrierrippe der Zentriereinrichtung, rampenförmig ausgebildet ist. Diese Ausbildung hilft vorzugsweise dabei, das Kolbenelement in einem Druckraum einer Zentralausrückvorrichtung zentrierend zu positionieren.

Vorzugsweise ist die Zentriereinrichtung, insbesondere die mindestens eine Zentrierrippe, außenseitig des ersten Teilabschnitts und/oder des zweiten Teilabschnitts angeordnet. Die mindestens eine Zentrierrippe kann somit am Außendurchmesser bzw. an einer äußeren Umfangsfläche des Kolbenelements angeordnet sein.

Ferner ist es bevorzugt, dass die Zentriereinrichtung, insbesondere die mindestens eine Zentrierrippe, innenseitig des ersten Teilabschnitts und/oder des zweiten Teilabschnitts angeordnet ist. Die mindestens eine Zentrierrippe kann somit am Innendurchmesser bzw. an einer inneren Umfangsfläche des Kolbenelements angeordnet sein.

Ferner kann vorgesehen sein, dass die Zentriereinrichtung, insbesondere mindestens eine Zentrierrippe der Zentriereinrichtung, ausgebildet ist, von dem ersten Teilabschnitt in Richtung des zweiten Teilabschnitts anzusteigen.

Ferner ist es möglich, dass im Querschnitt entlang axialer Richtung des Kolbenelements die Zentriereinrichtung, insbesondere mindestens eine Zentrierrippe der Zentriereinrichtung, in radialer Richtung beginnt, sich am ersten Teilabschnitt zu erheben und am zweiten Teilabschnitt zu enden.

Günstigerweise umfasst die Zentriereinrichtung mindestens eine Zentrierrippe.

Ferner ist es günstig, wenn die mindestens eine Zentrierrippe einen Rampenabschnitt aufweist, der sich vorzugsweise aus der äußeren Umfangsfläche des ersten Teilabschnitts erhebt.

Auch kann vorgesehen sein, dass die mindestens eine Zentrierrippe einen Plateauabschnitt aufweist, der sich vorzugsweise einerseits an einen Rampenabschnitt der mindestens einen Zentrierrippe und andererseits an den zweiten Teilabschnitt anschließt.

Vorzugsweise verbindet der Plateauabschnitt einen Rampenabschnitt der mindestens einen Zentrierrippe mit dem zweiten Teilabschnitt.

Ferner ist es möglich, dass der Plateauabschnitt eine äußere Fläche aufweist, die gleich orientiert ausgebildet ist, wie die äußere Umfangsfläche des ersten Teilabschnitts.

Vorteilhafterweise ist der erste Teilabschnitt hohlzylindrisch ausgebildet ist.

Des Weiteren ist es von Vorteil, wenn der zweite Teilabschnitt scheiben- und kreisringförmig ausgebildet ist.

Vorzugsweise ist das Kolbenelement einteilig ausgebildet.

Bevorzugterweise weist das Kolbenelement eine Dichtseite und eine Kupplungsseite auf, die gegenüberliegende Enden des Kolbenelements bilden.

Ferner ist bevorzugt, dass der erste Teilabschnitt die Dichtseite und der zweite Teilabschnitt die Kupplungsseite umfasst.

Günstigerweise sind mindestens zwei Zentrierrippen in Umfangsrichtung des Kolbenelements verteilt, insbesondere gleich verteilt, angeordnet.

Auch ist es günstig, wenn die mindestens zwei Zentrierrippen in Umfangsrichtung in gleichen Abständen zueinander angeordnet sind.

Des Weiteren kann vorgesehen sein, dass der erste Teilabschnitt an seiner Dichtseite einen Anschluss für ein Dichtelement zum Dichten eines Druckraums umfasst.

Vorzugsweise ist die Kupplungsseite des zweiten Teilabschnitts als Anlagefläche zur Anlage für eine Ausrücklagervorrichtung ausgebildet.

Ein zweiter Aspekt der vorliegenden Erfindung umfasst eine Zentralausrückvorrichtung, insbesondere für eine Doppelkupplung, für ein Fahrzeug.

Es wird ausdrücklich darauf hingewiesen, dass die Merkmale des Kolbenelements, wie sie unter dem ersten Aspekt erwähnt werden, einzeln oder miteinander kombinierbar bei der Zentralausrückvorrichtung Anwendung finden können.

Anders ausgedrückt, die oben unter dem ersten Aspekt der Erfindung genannten Merkmale betreffend das Kolbenelement können auch hier unter dem zweiten Aspekt der Erfindung mit weiteren Merkmalen kombiniert werden.

Bevorzugterweise weist eine Zentralausrückvorrichtung, insbesondere für eine Doppelkupplung, für ein Fahrzeug auf:
ein Kolbenelement für eine Zentralausrückvorrichtung zum Ein- und Ausrücken einer Kupplungsvorrichtung nach dem ersten Aspekt,
ein Gehäuseelement mit mindestens einem Druckraum,
wobei das Kolbenelement mit seinem ersten Teilabschnitt innerhalb des mindestens einen Druckraums angeordnet ist.

Ferner ist es bevorzugt, dass in einem ersten Zustand, bei oder über der Betriebstemperatur des Kolbenelements, das Kolbenelement samt der Zentriereinrichtung ausgebildet ist, einen Außendurchmesser aufzuweisen, der geringfügig kleiner als der Innendurchmesser des mindestens einen Druckraums ist. Dadurch ist das Kolbenelement durch die Zentriereinrichtung relativ zum mindestens einen Druckraum zentrierbar.

Ferner ist es von Vorteil, wenn in einem zweiten Zustand, unterhalb der Betriebstemperatur des Kolbenelements, das Kolbenelement samt der Zentriereinrichtung ausgebildet ist, einen Außendurchmesser aufzuweisen, der kleiner als der Innendurchmesser des mindestens einen Druckraums im ersten Betriebszustand ist. Dadurch verliert das Kolbenelement seine Zentriereigenschaft.

In der vorliegenden Beschreibung wird unter den Begriff Betriebstemperatur des Kolbenelements diejenige Temperatur verstanden, der das Kolbenelement bei einer Fahrt eines Fahrzeuges ausgesetzt ist, bei der der Motor des Fahrzeuges seine normale Betriebstemperatur, vorzugsweise in der Regel zwischen 80 und 100 °C bei einem Verbrennungsmotor, erreicht.

Günstigerweise ist im ersten Zustand der Rampenbereich und/oder der Plateaubereich der Zentrierrippe der Zentriereinrichtung ausgebildet, bei oder über Betriebstemperatur einen Außendurchmesser aufzuweisen, der zum Innendurchmesser des mindestens einen Druckraums einen ersten Abstand bildet.

Des Weiteren ist es günstig, wenn im zweiten Zustand der Rampenbereich und/oder der Plateaubereich der Zentrierrippe der Zentriereinrichtung ausgebildet ist, unterhalb der Betriebstemperatur einen Außendurchmesser aufzuweisen, der zum Innendurchmesser des Druckraums einen zweiten Abstand bildet.

Vorteilhafterweise ist der erste Abstand zwischen dem mindestens einen Druckraum und der Zentriereinrichtung kleiner ist als der zweite Abstand.

Bevorzugterweise ist an dem Kolbenelement eine Ausrücklagervorrichtung, insbesondere ein Ausrücklager, angeordnet.

Ferner ist es bevorzugt, dass die Zentralausrückvorrichtung ein weiteres Kolbenelement zum Ein- und Ausrücken einer Kupplungsvorrichtung aufweist, das vorzugsweise im Wesentlichen wie ein Kolbenelement nach dem ersten Aspekt ausgebildet ist, jedoch günstigerweise ohne eine Zentriereinrichtung.

Vorteilhafterweise ist das weitere Kolbenelement mit seinem ersten Teilabschnitt innerhalb des mindestens einen Druckraums angeordnet, wobei vorzugsweise an dem weiteren Kolbenelement eine weitere Ausrücklagervorrichtung, insbesondere ein Ausrücklager, angeordnet ist.

Auch ist es vorteilhaft, wenn die Zentralausrückvorrichtung pro Druckraum ein Dichtelement aufweist, das jeweils in dem Anschluss an der Dichtseite zum Dichten des Druckraums angeordnet ist.

Ferner ist es von Vorteil, wenn die Zentralausrückvorrichtung eine erste und/oder zweite Kupplungsvorrichtung umfasst, die als Tellerfeder zum Aktivieren oder Deaktivieren einer Kupplung ausgebildet ist.

Nachfolgend wird der oben dargestellte Erfindungsgedanke ergänzend mit anderen Worten ausgedrückt.

Dieser Gedanke betrifft vorzugsweise vereinfacht dargestellt ein Kolbenelement bzw. einen Kolben, der in einem oberen Bereich durch Zentrierrippen relativ zu einem Gehäuseelement einer Zentralausrückvorrichtung mittig zentrierbar ist.

Dabei erfolgt die Auslegung der Rippen vorzugsweise auf einen Temperaturbereich größer gleich der Betriebstemperatur. Hierdurch kann gewährleistet werden, dass das Kolbenelement beim Abstellen eines Fahrzeuges in einer zentrischen Lage innerhalb eines Druckraums des Gehäuseelements positionierbar ist und vorzugsweise so verbleibt.

Kühlt nun das Fahrzeug ab, verliert der Kolben bzw. das Kolbenelements vorzugsweise seine Zentriereigenschaft. Diese ist günstigerweise nach Erreichen der Einbausituation des Kolbenelements nicht mehr notwendig.

Die Zentrierrippen sind bevorzugterweise nur in einem oberen Bereich des Kolbenelements notwendig, da in der maximalen Extension des Kolbenelements bzw. wenn das Kolbenelement maximal aus dem Druckraum des Gehäuseelements der Zentralausrückvorrichtung ausgefahren ist, die Taumeleigenschaften des Kolbenelements vorzugsweise weiter gewährleistet bleiben sollen.

Nachstehend wird die Erfindung anhand eines Ausführungsbeispiels in Verbindung mit zugehörigen Zeichnungen näher erläutert. Hierbei zeigen schematisch:
- **Fig. 1**: eine Schnittansicht auf ein erfindungsgemäßes Kolbenelement für eine Zentralausrückvorrichtung mit einer vergrößerten Darstellung eines Teilbereichs;
- **Fig. 2**: eine räumliche Ansicht auf das Kolbenelement aus Figur 1;
- **Fig. 3**: eine Schnittansicht auf eine Zentralausrückvorrichtung mit einem Kolbenelement aus Figur 1; und
- **Fig. 4**: eine vergrößerte Darstellung eines Bereichs aus Figur 3.

In der nachfolgenden Beschreibung werden gleiche Bezugszeichen für gleiche Gegenstände verwendet.

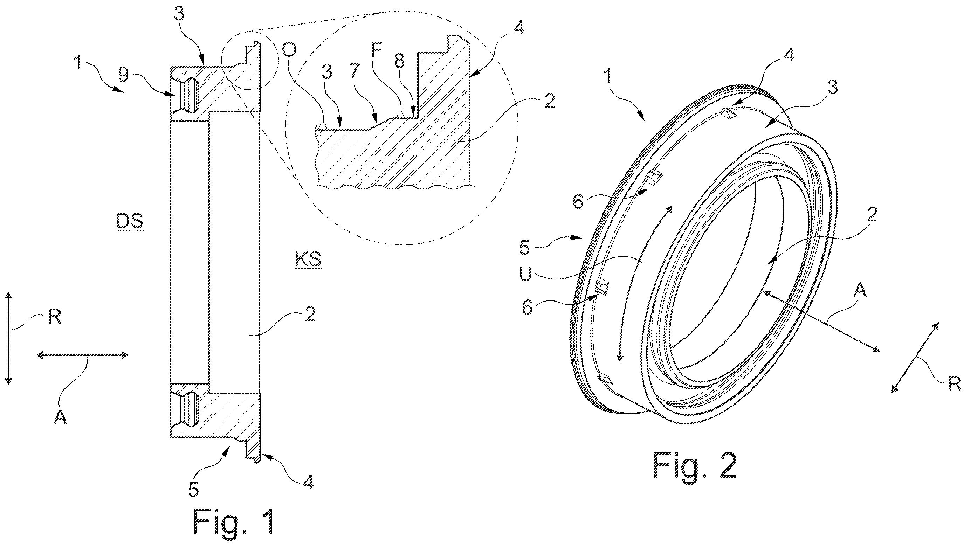

Figur 1 zeigt eine Schnittansicht auf ein erfindungsgemäßes Kolbenelement 1 für eine Zentralausrückvorrichtung 20 mit einer vergrößerten Darstellung eines Teilbereichs, wobei Figur 2 eine räumliche Ansicht auf das Kolbenelement 1 aus Figur 1 darstellt.

Der Einfachheit und Kürze halber werden nachfolgend die Figuren 1 und 2 gemeinsam beschrieben.

So zeigen die Figuren 1 und 2 also ein Kolbenelement 1 für eine Zentralausrückvorrichtung 20 zum Ein- und Ausrücken einer Kupplungsvorrichtung.

Das Kolbenelement 1 hat hierbei einen Körper 2 mit einem ersten Teilabschnitt 3 zum Dichten eines Druckraums 22 und mit einem zweiten Teilabschnitt 4 zum Kontaktieren einer Ausrücklagervorrichtung 24.

Der Körper 2 des Kolbenelements 1 umfasst dabei eine Zentriereinrichtung 5, um das Kolbenelement 1 innerhalb eines Druckraums 22 eines Gehäuseelements 21 einer Zentralausrückvorrichtung 20 zu zentrieren.

Im vorliegenden Ausführungsbeispiel hat die Zentriereinrichtung 5 diverse Zentrierrippen 6, die rampenförmig ausgebildet und außenseitig des ersten und des zweiten Teilabschnitts 3, 4 angeordnet sind.

Genauer ausgedrückt, sind die Zentrierrippen 6 ausgebildet, von dem ersten Teilabschnitt 3 in Richtung des zweiten Teilabschnitts 4 anzusteigen, wobei im Querschnitt entlang axialer Richtung A des Kolbenelements 1 (vgl. Figur 1) die Zentriereinrichtung 5 in radialer Richtung R beginnt, sich am ersten Teilabschnitt 3 zu erheben und am zweiten Teilabschnitt 4 zu enden.

Wie in Figur 1 zu erkennen, hat jede Zentrierrippe 6 einen Rampenabschnitt 7, der sich aus der äußeren Umfangsfläche O des ersten Teilabschnitts 3 erhebt.

Ferner hat jede Zentrierrippe 6 einen Plateauabschnitt 8, der sich einerseits an den Rampenabschnitt 7 und andererseits an den zweiten Teilabschnitt 4 anschließt.

So verbindet also der Plateauabschnitt 8 den Rampenabschnitt 7 mit dem zweiten Teilabschnitt 4, wobei der Plateauabschnitt 8 eine äußere Fläche F aufweist, die gleich orientiert ausgebildet ist, wie die äußere Umfangsfläche O des ersten Teilabschnitts 3.

Wie den Figuren 1 und 2 unschwer zu entnehmen, ist der erste Teilabschnitt 3 hohlzylindrisch ausgebildet, wohingegen der zweite Teilabschnitt 4 scheiben- und kreisringförmig ausgebildet ist. Das Kolbenelement 1 ist dabei einteilig ausgebildet.

Des Weiteren hat das Kolbenelement 1 eine Dichtseite DS und eine Kupplungsseite KS, die gegenüberliegende Enden des Kolbenelements 1 bilden.

Der erste Teilabschnitt 3 umfasst dabei die Dichtseite DS und der zweite Teilabschnitt 4 die Kupplungsseite KS.

Hierbei hat der erste Teilabschnitt 4 an seiner Dichtseite DS einen Anschluss 9 für ein Dichtelement 25 zum Dichten eines Druckraums 22.

Hingegen ist die Kupplungsseite KS des zweiten Teilabschnitts 5 als Anlagefläche zur Anlage für eine Ausrücklagervorrichtung 24 ausgebildet.

Wie insbesondere in Figur 2 dargestellt, sind die Zentrierrippen 6 in Umfangsrichtung U des Kolbenelements 1 gleich verteilt angeordnet bzw. sind die Zentrierrippen 6 in Umfangsrichtung U in gleichen Abständen zueinander angeordnet.

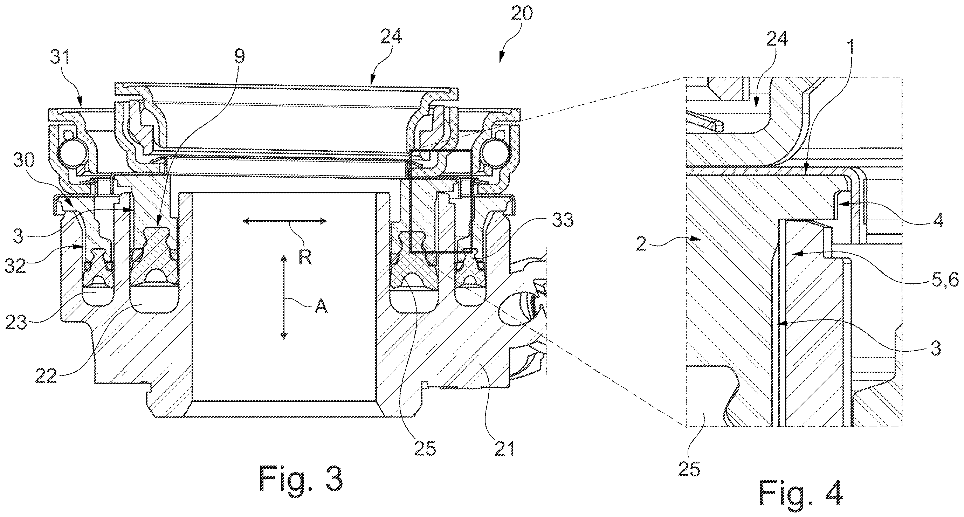

Figur 3 zeigt eine Schnittansicht auf eine Zentralausrückvorrichtung 20 mit dem Kolbenelement aus Figur 1, wobei Figur 4 eine vergrößerte Darstellung eines Bereichs aus Figur 3 darstellt.

Konkret handelt es sich in Figur 3 um eine Zentralausrückvorrichtung 20 für eine Doppelkupplung für ein Fahrzeug.

Diese hat, wie bereits erwähnt, das Kolbenelement 1 zum Ein- und Ausrücken einer Kupplungsvorrichtung aus Figur 1.

Ferner umfasst die Zentralausrückvorrichtung 20 ein Gehäuseelement 21 mit zwei Druckräumen 22, 23, wobei das Kolbenelement 1 mit seinem ersten Teilabschnitt 3 innerhalb des Druckraums 22 angeordnet ist.

In einem ersten Zustand gezeigt in den Figuren 3 und 4 bei Betriebstemperatur des Kolbenelements 1, ist das Kolbenelement 1 samt der Zentriereinrichtung 5 bzw. samt den Zentrierrippen 6 ausgebildet, einen Außendurchmesser aufzuweisen, der geringfügig kleiner als der Innendurchmesser des Druckraums 22 ist. Dadurch ist das Kolbenelement 1 durch die Zentriereinrichtung 5 bzw. deren Zentrierrippen 6 relativ zum Druckraum 22 zentriert.

Anders ausgedrückt, sind im ersten Zustand der Rampenbereich 7 und/oder der Plateaubereich 8 der Zentrierrippe 6 ausgebildet, bei Betriebstemperatur einen Außendurchmesser aufzuweisen, der zum Innendurchmesser des Druckraums 22 einen ersten Spalt bzw. einen ersten Abstand bildet.

In einem zweiten Zustand (nicht dargestellt), unterhalb der Betriebstemperatur des Kolbenelements 1, ist das Kolbenelement 1 samt der Zentriereinrichtung 5 bzw. samt den Zentrierrippen 6 ausgebildet, einen Außendurchmesser aufzuweisen, der kleiner als der Innendurchmesser des Druckraums 22 im ersten Betriebszustand ist. Dadurch verliert das Kolbenelement 1 seine Zentriereigenschaft.

Mit anderen Worten ausgedrückt, sind im zweiten Zustand der Rampenbereich 7 und/oder der Plateaubereich 8 der Zentrierrippe 6 ausgebildet, unterhalb der Betriebstemperatur einen Außendurchmesser aufzuweisen, der zum Innendurchmesser des Druckraums 22 einen zweiten Spalt bzw. einen zweiten Abstand bildet.

Bei Vergleich des ersten Zustands mit dem zweiten Zustand ist festzuhalten, dass der erste Abstand zwischen Druckraum und Zentrierrippe 6 kleiner ist als der zweite Abstand. Dementsprechend ist also der Spalt abhängig von der Betriebstemperatur.

Des Weiteren zeigen Figuren 3 und 4, dass an dem Kolbenelement 1 eine Ausrücklagervorrichtung 24, insbesondere ein Ausrücklager, angeordnet ist.

Ferner hat die Zentralausrückvorrichtung 20 ein weiteres Kolbenelement 30 zum Ein- und Ausrücken einer Kupplungsvorrichtung, das ähnlich zum Kolbenelement 1 ausgebildet ist.

Das weitere Kolbenelement 30 ist mit seinem ersten Teilabschnitt 32 innerhalb des weiteren Druckraums 23 angeordnet, wobei an dem weiteren Kolbenelement 30 eine weitere Ausrücklagervorrichtung 31, insbesondere ein Ausrücklager, angeordnet ist.

Wie den Figuren 3 und 4 ferner zu entnehmen, weist die Zentralausrückvorrichtung 20 pro Druckraum 22, 23 ein Dichtelement 25, 33 auf, das jeweils in dem Anschluss 9 des Kolbenelements 1, 30 an der Dichtseite DS zum Dichten des Druckraums 22, 23 angeordnet ist.

### Bezugszeichenliste

- 1: Kolbenelement
- 2: Körper
- 3: erster Teilabschnitt
- 4: zweiter Teilabschnitt
- 5: Zentriereinrichtung
- 6: Zentrierrippe
- 7: Rampenabschnitt
- 8: Plateauabschnitt
- 9: Anschluss
- 20: Zentralausrückvorrichtung
- 21: Gehäuseelement
- 22: Druckraum
- 23: Druckraum
- 24: Ausrücklagervorrichtung
- 25: Dichtelement
- 30: Kolbenelement
- 31: Ausrücklagervorrichtung
- 32: erster Teilabschnitt
- 33: Dichtelement
- A: axiale Richtung
- R: radiale Richtung
- U: Umfangsrichtung
- O: Umfangsfläche des ersten Teilabschnitts
- F: äußere Fläche des Plateauabschnitts
- DS: Dichtseite
- KS: Kupplungsseite

## Patentansprüche

1. Zentralausrückvorrichtung (20), für ein Fahrzeug aufweisend:
ein Kolbenelement (1) für eine Zentralausrückvorrichtung (20) zum Ein- und Ausrücken einer Kupplungsvorrichtung
mit einem Körper (2) mit einem ersten Teilabschnitt (3) zum Dichten eines Druckraums (22) und mit einem zweiten Teilabschnitt (4) zum Kontaktieren einer Ausrücklagervorrichtung (24),
wobei der Körper (2) des Kolbenelements (1) eine Zentriereinrichtung (5) umfasst, um das Kolbenelement (1) innerhalb eines Druckraums (22) eines Gehäuseelements (21) einer Zentralausrückvorrichtung (20) zu zentrieren,ein Gehäuseelement (21) mit mindestens einem Druckraum (22, 23),
wobei das Kolbenelement (1) mit seinem ersten Teilabschnitt (3) innerhalb des mindestens einen Druckraums (22) angeordnet ist,
**dadurch gekennzeichnet, dass**
die mindestens eine Zentriereinrichtung (5) mindestens eine Zentrierrippe (6) umfasst, welche rampenförmig ausgebildet und außenseitig oder innenseitig des ersten Teilabschnitts (3) und/oder des zweiten Teilabschnitts (4) angeordnet ist,
in einem ersten Zustand, bei oder über der Betriebstemperatur des Kolbenelements (1), das Kolbenelement (1) samt der Zentriereinrichtung (5) ausgebildet ist, einen Außendurchmesser aufzuweisen, der geringfügig kleiner als der Innendurchmesser des mindestens einen Druckraums (22) ist, wodurch das Kolbenelement (1) durch die Zentriereinrichtung (5) relativ zum mindestens einen Druckraum (22), zentrierbar ist,
in einem zweiten Zustand, unterhalb der Betriebstemperatur des Kolbenelements (1), das Kolbenelement (1) samt der Zentriereinrichtung (5) ausgebildet ist, einen Außendurchmesser aufzuweisen, der kleiner als der Innendurchmesser des mindestens einen Druckraums (22) im ersten Betriebszustand ist,
wodurch das Kolbenelement (1) seine Zentriereigenschaft verliert.

2. Zentralausrückvorrichtung nach Anspruch 1,
wobei im ersten Zustand der Rampenbereich (7) und/oder der Plateaubereich (8) der Zentrierrippe (6) der Zentriereinrichtung (5) ausgebildet ist, bei oder über Betriebstemperatur einen Außendurchmesser aufzuweisen, der zum Innendurchmesser des mindestens einen Druckraums (22) einen ersten Abstand bildet,
wobei vorzugsweise im zweiten Zustand der Rampenbereich (7) und/oder der Plateaubereich (8) der Zentrierrippe (6) der Zentriereinrichtung (5) ausgebildet ist, unterhalb der Betriebstemperatur einen Außendurchmesser aufzuweisen, der zum Innendurchmesser des Druckraums (22) einen zweiten Abstand bildet, wobei vorzugsweise der erste Abstand zwischen dem mindestens einen Druckraum (22, 23) und der Zentriereinrichtung (5) kleiner ist als der zweite Abstand.

3. Zentralausrückvorrichtung nach Anspruch 1 oder 2,
wobei die mindestens eine Zentrierrippe (6) der Zentriereinrichtung (5), ausgebildet ist, von dem ersten Teilabschnitt (3) in Richtung des zweiten Teilabschnitts (4) anzusteigen, und
wobei im Querschnitt entlang axialer Richtung (A) des Kolbenelements (1) die mindestens eine Zentrierrippe (6) der Zentriereinrichtung (5), in radialer Richtung (R) beginnt, sich am ersten Teilabschnitt (3) zu erheben und am zweiten Teilabschnitt (4) zu enden.

4. Zentralausrückvorrichtung nach einem der vorstehenden Ansprüche,
wobei die mindestens eine Zentrierrippe (6) einen Rampenabschnitt (7) aufweist,
wobei sich der Rampenabschnitt (7) aus der äußeren Umfangsfläche (O) des ersten Teilabschnitts (3) erhebt.

5. Zentralausrückvorrichtung nach einem der vorangehenden Ansprüche,
wobei die mindestens eine Zentrierrippe (6) einen Plateauabschnitt (8) aufweist,
wobei sich der Plateauabschnitt (8) einerseits an einen Rampenabschnitt (7) der mindestens einen Zentrierrippe (6) und andererseits an den zweiten Teilabschnitt (4) anschließt,
wobei der Plateauabschnitt (8) einen Rampenabschnitt (7) der mindestens einen Zentrierrippe (6) mit dem zweiten Teilabschnitt (4) verbindet,
wobei der Plateauabschnitt (8) eine äußere Fläche (F) aufweist, die gleich orientiert ausgebildet ist, wie die äußere Umfangsfläche (O) des ersten Teilabschnitts (3).

6. Zentralausrückvorrichtung nach einem der vorangehenden Ansprüche,
wobei der erste Teilabschnitt (3) hohlzylindrisch ausgebildet ist,
wobei der zweite Teilabschnitt (4) scheiben- und kreisringförmig ausgebildet ist,
wobei das Kolbenelement (1) einteilig ausgebildet ist.

7. Zentralausrückvorrichtung nach einem der vorangehenden Ansprüche,
wobei das Kolbenelement (1) eine Dichtseite (DS) und eine Kupplungsseite (KS) aufweist, die gegenüberliegende Enden des Kolbenelements (1) bilden,
wobei der erste Teilabschnitt (3) die Dichtseite (DS) und der zweite Teilabschnitt (4) die Kupplungsseite (KS) umfasst.

8. Zentralausrückvorrichtung nach einem der vorangehenden Ansprüche,
wobei mindestens zwei Zentrierrippen (6) in Umfangsrichtung (U) des Kolbenelements (1) verteilt, insbesondere gleich verteilt, angeordnet sind,
wobei die mindestens zwei Zentrierrippen (6) in Umfangsrichtung (U) in gleichen Abständen zueinander angeordnet sind.

9. Zentralausrückvorrichtung nach einem der vorangehenden Ansprüche,
wobei der erste Teilabschnitt (4) an seiner Dichtseite (DS) einen Anschluss (9) für ein Dichtelement (25) zum Dichten eines Druckraums (22) umfasst,
wobei die Kupplungsseite (KS) des zweiten Teilabschnitts (5) als Anlagefläche zur Anlage für eine Ausrücklagervorrichtung (24) ausgebildet ist.

## Claims

1. A concentric slave cylinder (20) for a
vehicle, having:
a piston element (1) for a concentric slave cylinder (20) for engaging and disengaging a clutch device,
comprising a body (2) having a first portion (3) for sealing a pressure chamber (22) and having a second portion (4) for contacting a release bearing device (24),
wherein the body (2) of the piston element (1) comprises a centring device (5) in order to centre the piston element (1) within a pressure chamber (22) of a housing element (21) of a concentric slave cylinder (20), a housing element (21) comprising at least one pressure chamber (22, 23), wherein the piston element (1) is arranged with its first portion (3) within the at least one pressure chamber (22),
**characterised in that**
the at least one centring device (5) comprises at least one centring rib (6), which is designed in a ramp shape and is arranged on the outside or inside of the first portion (3) and/or the second portion (4),
in a first state, at or above the operating temperature of the piston element (1), the piston element (1) together with the centring device (5) is designed to have an external diameter that is slightly smaller than the internal diameter of the at least one pressure chamber (22), whereby the piston element (1) is centrable relative to the at least one pressure chamber (22) by the centring device (5), and
in a second state, below the operating temperature of the piston element (1), the piston element (1) together with the centring device (5) is designed to have an external diameter that is smaller than the internal diameter of the at least one pressure chamber (22) in the first operating state, whereby the piston element (1) loses its centring properties.

2. The concentric slave cylinder according to claim 1,
wherein in the first state the ramp region (7) and/or the plateau region (8) of the centring rib (6) of the centring device (5) is designed to have an external diameter at or above operating temperature, which forms a first distance from the internal diameter of the at least one pressure chamber (22),
wherein, preferably, in the second state the ramp region (7) and/or the plateau region (8) of the centring rib (6) of the centring device (5) is designed to have an external diameter below operating temperature,
which forms a second distance from the internal diameter of the pressure chamber (22), the first distance between the at least one pressure chamber (22, 23) and the centring device (5) preferably being smaller than the second distance.

3. The concentric slave cylinder according to claim 1 or 2,
wherein the at least one centring rib (6) of the centring device (5) is designed to ascend from the first portion (3) in the direction of the second portion (4), and
wherein, in cross-section along the axial direction (A) of the piston element (1), the at least one centring rib (6) of the centring device (5) begins, in the radial direction (R), to rise at the first portion (3) and end at the second portion (4).

4. The concentric slave cylinder according to one of the preceding claims,
wherein the at least one centring rib (6) has a ramp portion (7),
wherein the ramp portion (7) rises from the outer peripheral surface (O) of the first portion (3).

5. The concentric slave cylinder according to one of the preceding claims,
wherein the at least one centring rib (6) has a plateau portion (8),
wherein the plateau portion (8) adjoins, on the one hand, a ramp portion (7) of the at least one centring rib (6) and, on the other hand, the second portion (4),
wherein the plateau portion (8) connects a ramp portion (7) of the at least one centring rib (6) to the second portion (4),
wherein the plateau portion (8) has an outer surface (F) which is oriented in the same way as the outer peripheral surface (O) of the first portion (3).

6. The concentric slave cylinder according to one of the preceding claims,
wherein the first portion (3) is hollow cylindrical,
wherein the second portion (4) is disc-shaped and annular ring-shaped,
wherein the piston element (1) is formed in one piece.

7. The concentric slave cylinder according to one of the preceding claims,
wherein the piston element (1) has a sealing side (DS) and a clutch side (KS), which form opposite ends of the piston element (1),
wherein the first portion (3) comprises the sealing side (DS) and the second portion (4) comprises the clutch side (KS).

8. The concentric slave cylinder according to one of the preceding claims,
wherein at least two centring ribs (6) are arranged distributed, in particular evenly distributed, in the circumferential direction (U) of the piston element (1),
wherein the at least two centring ribs (6) are arranged at equal distances from one another in the circumferential direction (U).

9. The concentric slave cylinder according to one of the preceding claims,
wherein the first portion (4) comprises, on its sealing side (DS), a connection (9) for a sealing element (25) for sealing a pressure chamber (22),
wherein the clutch side (KS) of the second portion (5) is designed as a contact surface for contact with a release bearing device (24).

## Revendications

1. Cylindre récepteur concentrique (20) pour un
véhicule présentant :
un élément de piston (1) pour un cylindre récepteur concentrique (20) destiné à engager et à désengager un dispositif d'embrayage
comportant un corps (2) muni d'une première section (3) pour fermer hermétiquement une chambre de pression (22) et d'une seconde section (4) pour entrer en contact avec un dispositif de butée de débrayage (24),
dans lequel le corps (2) de l'élément de piston (1) comprend un dispositif de centrage (5) pour centrer l'élément de piston (1) dans une chambre de pression (22) d'un élément de boîtier (21) d'un cylindre récepteur concentrique (20), un élément de boîtier (21) avec au moins une chambre de pression (22, 23),
dans lequel l'élément de piston (1) est agencé avec sa première section (3) à l'intérieur de l'au moins une chambre de pression (22),
**caractérisé en ce que**
l'au moins un dispositif de centrage (5) comprend au moins une nervure de centrage (6) conçue en forme de rampe et agencée à l'extérieur ou à l'intérieur de la première section (3) et/ou de la seconde section (4),
dans un premier état, à la température de service de l'élément de piston (1) ou au-dessus, l'élément de piston (1) est conçu avec le dispositif de centrage (5) pour avoir un diamètre extérieur légèrement inférieur au diamètre intérieur de l'au moins une chambre de pression (22), moyennant quoi l'élément de piston (1) peut être centré par rapport à au moins une chambre de pression (22) par le dispositif de centrage (5),
dans un second état, sous la température de service de l'élément de piston (1), l'élément de piston (1) est conçu avec le dispositif de centrage (5) pour avoir un diamètre extérieur inférieur au diamètre intérieur de l'au moins une chambre de pression (22) dans un premier état de service, moyennant quoi l'élément de piston (1) perd ses propriétés de centrage.

2. Cylindre récepteur concentrique selon la revendication 1,
dans lequel, dans le premier état, la zone de rampe (7) et/ou la zone de plateau (8) de la nervure de centrage (6) du dispositif de centrage (5) est conçue pour avoir un diamètre extérieur, à la température de service ou au-dessus, formant un premier écart avec le diamètre intérieur de l'au moins une chambre de pression (22),
dans lequel, de préférence, dans un second état, la zone de rampe (7) et/ou la zone de plateau (8) de la nervure de centrage (6) du dispositif de centrage (5) est conçue pour avoir un diamètre extérieur, sous la température de service,
formant un second écart avec le diamètre intérieur de la chambre de pression (22), dans lequel le premier écart entre l'au moins une chambre de pression (22, 23) et le dispositif de centrage (5) est de préférence inférieur au second écart.

3. Cylindre récepteur concentrique selon la revendication 1 ou 2,
dans lequel l'au moins une nervure de centrage (6) du dispositif de centrage (5) est conçue pour s'élever à partir de la première section (3) en direction de la seconde section (4), et
dans lequel, en coupe transversale le long de la direction axiale (A) de l'élément de piston (1), l'au moins une nervure de centrage (6) du dispositif de centrage (5), commence à s'élever dans la direction radiale (R) à la première section (3) et à se terminer à la seconde section (4).

4. Cylindre récepteur concentrique selon l'une des revendications précédentes,
dans lequel l'au moins une nervure de centrage (6) présente une section en rampe (7),
dans lequel la section en rampe (7) s'élève à partir de la surface périphérique externe (O) de la première section (3).

5. Cylindre récepteur concentrique selon l'une des revendications précédentes,
dans lequel l'au moins une nervure de centrage (6) présente une section de plateau (8),
dans lequel la section de plateau (8) est adjacente d'une part à une section en rampe (7) de l'au moins une nervure de centrage (6) et d'autre part à la seconde section (4),
dans lequel la section de plateau (8) relie une section en rampe (7) de l'au moins une nervure de centrage (6) à la seconde section (4),
dans lequel la section de plateau (8) présente une surface externe (F) qui est orientée de la même manière que la surface périphérique externe (O) de la première section (3).

6. Cylindre récepteur concentrique selon l'une des revendications précédentes,
dans lequel la première section (3) est conçue sous une forme cylindrique creuse,
dans lequel la seconde section (4) est conçue sous la forme d'un disque et d'un anneau circulaire,
dans lequel l'élément de piston (1) est formé d'une seule pièce.

7. Cylindre récepteur concentrique selon l'une des revendications précédentes,
dans lequel l'élément de piston (1) présente un côté d'étanchéité (DS) et un côté d'embrayage (KS) qui forment les extrémités opposées de l'élément de piston (1),
dans lequel la première section (3) comprend le côté d'étanchéité (DS) et la seconde section (4) comprend le côté d'embrayage (KS).

8. Cylindre récepteur concentrique selon l'une des revendications précédentes,
dans lequel au moins deux nervures de centrage (6) sont disposées de manière répartie, en particulier uniformément répartie, dans la direction circonférentielle (U) de l'élément de piston (1),
dans lequel les au moins deux nervures de centrage (6) sont agencées à égale distance l'une de l'autre dans la direction circonférentielle (U).

9. Cylindre récepteur concentrique selon l'une des revendications précédentes,
dans lequel la première section (4) comprend sur son côté d'étanchéité (DS) un raccord (9) pour un élément d'étanchéité (25) pour fermer hermétiquement une chambre de pression (22),
dans lequel le côté d'embrayage (KS) de la seconde section (5) est conçu comme surface d'appui pour l'appui pour un dispositif de butée de débrayage (24).
